## Europäisches Patentamt
## European Patent Office
## Office européen des brevets

(19)

(11) Publication number: **0 148 600**
**B1**

(12)

# EUROPEAN PATENT SPECIFICATION

(45) Date of publication of patent specification: **13.05.87**

(51) Int. Cl.⁴: **A 23 J 3/00, A 23 L 2/00**

(21) Application number: **84308584.6**

(22) Date of filing: **10.12.84**

(54) **Process for manufacturing a hydrolised vegetable proteine isolate and its use in beverages and other foodstuffs.**

(30) Priority: **14.12.83 US 561402**

(43) Date of publication of application:
**17.07.85 Bulletin 85/29**

(45) Publication of the grant of the patent:
**13.05.87 Bulletin 87/20**

(84) Designated Contracting States:
**BE DE FR GB IT NL**

(56) References cited:
**FR-A-2 074 905
FR-A-2 388 047
FR-A-2 388 047
US-A-3 830 942**

**CHEMICAL ABSTRACTS, vol. 88, no. 21, 22nd May 1978, page 251, no. 148327z, Columbus, Ohio, US; S. UDENFRIEND et al.: "Fluorescent techniques for ultramicro peptide and protein chemistry".**

(73) Proprietor: **RALSTON PURINA COMPANY
Checkerboard Square
St. Louis Missouri 63164 (US)**

(72) Inventor: **Cipollo, Kent Lee
5824 Bristlecome Court
St. Louis Missouri 63129 (US)**
Inventor: **Wagner, Thomas Joseph
4277 Timberline Drive -
Hillsboro Missouri 63050 (US)**

(74) Representative: **Tubby, David George et al
MARKS & CLERK 57-60 Lincoln's Inn Fields
London WC2A 3LS (GB)**

Courier Press, Leamington Spa, England.

# 0 148 600

**Description**

The present invention relates to a process for the production of a hydrolyzed vegetable protein isolate which is particularly suitable for use in the production of various food products, especially beverages.

Vegetable protein products, particularly isolates such as soy isolates, have found widespread usage in a variety of food products, but they have been very difficult to adapt to the production of certain products, such as cheese, or beverages such as diet or nutritious drinks.

Beverage products, such as diet drinks or simulated milks, have presented special problems with regard to the use of soy and other vegetable isolates. While a variety of techniques have been proposed for improving the dispersibility (or "wet out") characteristics of vegetable protein isolates, the suspension characteristics of these products are rather poor, particularly when the drink or beverage has a pH of between 6 and 8. In this regard, the suspension characteristics of the product refer to the ability of the product to remain in suspension in an aqueous medium for an extended period of time without precipitation or coagulation of the proteinaceous solids. This functional characteristic is contrasted with the dispersibility or wet out characteristics of the product which refer to the ability of the material to disperse readily in an aqueous medium at the time of mixing.

It is important that beverage products, such as diet drinks or simulated milks, should have relatively homogeneous appearance, and this appearance is very dependent upon the suspension characteristics of the protein materials used in preparing these beverages.

We have now discovered a process for the production of a vegetable protein isolate which is particularly suitable for use in producing beverage products and which can have improved suspension and flavour characteristics in an aqueous medium.

We have found that this can be achieved by the enzymatic hydrolysis of an isoelectric-precipitated vegetable protein isolate, provided that the hydrolysis is controlled so as to provide a restricted number of available amino end groups, which is predetermined in relation to the characteristics of the product which it is desired to produce.

A similar process, especially suitable for the production of simulated cheese products, is disclosed in our European Patent Application No. 84307306.5, published after the priority and filling dates hereof but with an earlier priority.

Thus, the present invention consists in a process for preparing a hydrolysed vegetable protein isolate, in which protein is precipitated at its isoelectric point from an aqueous extract of a vegetable protein material, and a slurry of the precipitated protein is subjected to enzymatic hydrolysis, characterised in that the enzymatic hydrolysis is terminated when the protein has from 20 to 35 available amino end groups per $10^5$ grams of solid, as measured by fluoroescamine reaction.

The present invention produces a hydrolyzed vegetable protein isolate which is highly suitable for use in the production of beverages, diet drinks, simulated milk and/or other liquid products in which a vegetable protein isolate is an essential ingredient.

It has been determined that, if the enzymatic hydrolysis is controlled to produce a predetermined number of available amino end groups, a hydrolyzed vegetable protein isolate is obtained that can be employed in various food products, particularly in a beverage or simulated milk product. The exact reasons for the importance of controlled hydrolysis are not entirely understood; however, it is apparent that other procedures that have been employed for the production of hydrolyzed vegetable proteins for use in beverage and other products have not appreciated the need for control of the hydrolysis to within a predetermined range in order to achieve the most desirable physical or suspension characteristics when that isolate is employed in products such as beverages.

The vegetable protein used as a starting material in the process of the present invention may be derived from a variety of sources as is well-known in the art. The precise vegetable protein material employed is not particularly critical to the present invention and the material used will normally be chosen having regard to the normal commercial criteria, including availability, price and assurance of a continued supply. At present, protein materials derived from the oilseeds, such as soybeans, sesame seeds, cottonseeds, rapeseeds and peanuts, are relatively widely available and economical and these are, for that reason, preferred. Of these, the protein materials derived from soybeans are particularly widely available and relatively cheap and the present invention will, therefore, be described primarily with reference to the production of a hydrolyzed protein isolate from soy materials; nevertheless, it should be appreciated that the present invention is not limited to this particular choice of materials and that it is generally suitable for use with a wide variety of protein materials from vegetable sources.

The following is a typical procedure which may be employed to produce a hydrolyzed protein isolate from soybeans and essentially the same procedure may be employed equally with other materials, although minor modifications may be required in conventional processing steps.

The starting material is preferably a protein material from which, in the case of oilseeds, the oil has first been removed. This may be done by crushing or grinding the soybeans or other oilseeds and passing them through a conventional oil expeller. However, it is preferable to remove the oil by solvent extraction techniques, using, for example, an aliphatic hydrocarbon such as hexane or an azeotrope of hexane with another material. These solvent-extraction techniques are conventionally employed for the removal of lipids or oil from vegetable protein materials and do not require any detailed description here. Following

2

extraction to remove residual lipids and oil, a vegetable protein material, for example flakes, generally having a high degree of dispersibility is obtained.

The resulting solids, in the case of soybeans, can comprise soybean flakes, flour or meal, depending upon the degree of grinding. The proteins and many of the soluble sugars are then extracted from the other constituents of the soybean material (such as cellulosic material) by placing the flakes, meal or flour in an aqueous bath and then extracting with an aqueous medium to provide an aqueous extract having a pH of at least 6.0, preferably at least 6.5 and more preferably from 6.5 to 10.0. Where an elevated pH value is desired, particularly a pH value above 6.5, it is normally necessary to employ an alkaline material in the aqueous medium; typical alkaline materials include sodium hydroxide, potassium hydroxide, calcium hydroxide and other commonly accepted food grade alkalis; the particular choice of this material is in no way critical to the present invention. A pH value of about 7 or above is generally preferred, since alkaline extraction facilitates solubilization of the protein, but the exact pH value to be employed is not critical to the present invention and typically the pH of the aqueous extract will be at least 6.0 and preferably from 6.5 to 10. The weight ratio of aqueous extractant to vegetable protein material is typically from 5:1 to 20:1, more preferably about 10:1, but this, again, is not critical to the present invention.

It is also desirable, but not essential, in practicing this aqueous extraction that an elevated temperature be employed to facilitate solubilization of the protein; however, ambient temperatures are equally satisfactory, if desired. The exact temperature employed is not critical to the present invention and will be chosen having regard to the normal criteria employed in the aqueous extraction of vegetable proteins. As a guide, the actual extraction temperature may suitably range from ambient temperature to 120°F (49°C), the preferred temperature being about 90°F (about 32°C). The time required for extraction is similarly not critical and any period of time may be conveniently employed, the preferred time being about 30 minutes.

After extraction of the protein from the vegetable protein material, the resulting aqueous protein extract is preferably stored in a holding tank or other suitable container, whilst a second extraction is performed on the insoluble or residual solids from the first extraction step; this second extraction is not, of course, essential, but it does have the advantage that it removes any residual protein which may not have been removed during the first extraction and thus increases the yield of protein and hence the efficiency of the process. If this second extraction is carried out, it will be carried out in a manner similar to that of the first extraction, using an extractant having a pH which is preferably at least 6.0 and more preferably from 6.5 to 10.0. In any second extraction step, we prefer that the weight ratio of extractant to residual material should be from 4:1 to 15:1, more preferably about 6:1. Otherwise, the conditions of the second extraction step are essentially the same as those of the first extraction step. After separating the second aqueous extract, it is preferably combined with the first extract and the whole treated as described hereafter.

The resulting aqueous protein extract (which may or may not be a combination of the first and second extracts) will normally have a pH of at least 6.0, preferably from 6.5 to 10. The protein is then precipitated from this extract by adjusting the pH of the extract to a value at or near the isoelectric point of the protein, thus forming an insoluble precipitate. The exact pH to which the protein extract should be adjusted will vary, depending upon the particular vegetable protein source material employed; however, for soy protein, a typical pH for the isoelectric point of soy protein would be from 4.0 to 5.0 and more commonly from 4.4 to 4.6; the isoelectric points of other proteins are equally well-known in the art. The pH of the extract may be adjusted to a value within these ranges by adding a common acidic reagent, such as acetic acid, sulphuric acid, phosphoric acid, hydrochloric acid or any other acidic reagent commonly used in the food industry.

After the protein has been precipitated, a concentration step is preferably carried out in order to concentrate the protein precipitate and remove as large a percentage of the whey as possible. The particular means employed to concentrate the protein precipitate is not critical and a wide variety of conventional processing techniques, including centrifugation, may be employed. If desired, the concentrated precipitate may be washed with water, to minimize the contamination by the whey or aqueous liquor. After washing and isolating the precipitated protein, it is formed into a slurry.

The amount of water added to the precipitated protein to form the slurry is preferably sufficient to provide a slurry having a solids content of from 3 to 30% by weight, more preferably from 5 to 17% by weight. The pH of the slurry is then adjusted to a value appropriate to the enzyme which is employed for hydrolysis. In general, the enzymes available for hydrolysis of vegetable proteins require a pH value within the range from 3.0 to 8.5 and the preferred enzymes operate most efficiently at a pH value from 6.5 to 7.5. The pH may be adjusted by the addition of an appropriate alkaline or acidic material, examples of which have been given above.

After formation of the slurry and, where required, adjustment of solids content and/or pH value, the slurry is enzymatically hydrolyzed; we prefer that the enzymatic hydrolysis should be carried out by the procedure described in US 3,694,221, which generally involves the application of dynamic heating (or "jet cooking") of the slurry at a temperature of at least 220°F (104°C) in order to expose the reactive sites in the protein molecules prior to enzymatic hydrolysis. However, this procedure for enzymatic hydrolysis, including pH value, solids content, time, enzyme, enzyme concentration and other procedures, represents only a preferred embodiment of the present invention and it is not intended to limit the present invention to any of these criteria. In particular, the need for or absence of jet cooking or heating prior to or subsequent to hydrolysis is not a critical feature of the present invention. The critical factor of the present invention is control of the hydrolysis conditions to achieve a predetermined number of available amino end groups rather than any preliminary heating or heat inactivation step or any variations in the procedure for enzymatic hydrolysis.

It is, however, preferred in accordance with the present invention, at least in relation to the production of an isolate for use in beverages, that, after formation of the slurry, the reactive sites on the protein molecule should be exposed by dynamic heating, as described in US 3,694,221. This involves passing the slurry through a jet cooker, preferably at a temperature of at least 220°F (104°C) for at least a few seconds; more preferably, the temperature is from 220 to 400°F (104—204°C) and the time is more preferably from 7 to 100 seconds. The exposure of reactive sites on the protein molecule achieved by dynamic heating facilitates enzymatic hydrolysis and provides a better degree of control of the required number of available amino end groups on the protein molecule.

After the desired dynamic heating or jet cooking, this step may be terminated by ejecting the heated slurry (which has been held under positive pressure for at least a few seconds and preferably from 7 to 100 seconds) into an atmosphere of lower pressure, typically a vacuum chamber, preferably operated at from 20 to 26 inches of Mercury (0.68—0.88 bars) in order to flash off water vapour, which thus cools the slurry to a temperature of from 120—125°F (49—52°C).

The cooled slurry may then be subjected to the enzymatic hydrolysis required by the present invention. The enzyme employed is a protease, preferably a protease such as bromelain, and the enzymatic hydrolysis is controlled to produce a predetermined number of available amino end groups in the protein material. In the case of an isolate used for making a beverage product, this is from 20 to 35, preferably from 25 to 29, moles of amino end groups per $10^5$ g of solids, as measured by fluorescamine reaction. It has been determined that control of the number of available amino end groups produces an enzymatically hydrolyzed vegetable protein isolate which has extremely desirable suspension characteristics when used in various beverages, particularly those having a pH of between about 6.0 and 8.0.

The exact temperature, time and pH values at which the enzymatic hydrolysis is conducted are not critical to the present invention, since these can depend upon the specific enzyme employed. Although there are other ways of controlling the number of available amino end groups on the protein molecule, and any such method may be employed in the present invention, we have found it convenient to adjust the time of hydrolysis and amount of enzyme, in relation to the nature of the enzyme used, so as to control the production of available amino end groups. Thus, the amount of enzyme and time of hydrolysis will be chosen having regard to the predetermined number of available amino end groups desired.

Where a protease such as bromelain is employed, the enzymatic hydrolysis is preferably carried out for a period of from 10 to 30 minutes; the temperature of hydrolysis is preferably from 125 to 127°F (52—53°C) and the pH is preferably a value within the range from 6.5 to 7.5. The balance between hydrolysis time, temperature, pH and amount of enzyme can be varied to achieve the desired degree of hydrolysis, as measured by the number of free amino end groups. Other factors being equal, a longer time will be required for hydrolysis in the present invention than is required in our copending European application no. 84307306.5, and thus the preferred hydrolysis time will normally be towards the upper end of the proposed range, e.g. from 20 to 25 minutes. However, by adjustment of the other factors, lesser, or indeed greater, hydrolysis times may be employed.

The enzymatic hydrolysis can be arrested by the application of heat to deactivate the enzyme or by alteration of the pH, once the required number of amino end groups has been achieved. Following termination of the enzymatic hydrolysis, the hydrolyzed isolate may, if desired, be dewatered in order to produce a uniform, powdered, dried product; the particular means of drying or dewatering is not critical to the present invention. Flash drying techniques provide an economical and convenient method of producing powders having excellent dispersibility. Of the flash drying techniques, spray drying is preferred and provides the most convenient and economical method for producing dried protein isolates from the product of the process of the present invention.

The enzymatically hydrolyzed vegetable protein isolate produced as described above, either with or without drying, may be employed in the production of various beverage products, particularly simulated milk or other flavoured or unflavoured dietary or nutritious drinks, and the present invention is not intended to be limited by the various ingredients used to prepare the various beverage products for which the protein isolate of the present invention is suitable, since the formulation of these materials is well within the skill of the art.

The invention is further illustrated by the following Examples.

Examples
Fluorescamine reaction

In these Examples, the number of available amino end groups was measured by the procedure described below:

I. Equipment
    A.   Balance—±0.001 g sensitivity.
    B.   Filter paper.
    C.   Fluorimeter—with 390 nm excitation and 475 nm emission wavelength and a 1 cm path length cell.
    D.   Funnel, long stem.

E.   Pipets, 10 ml seriological.
F.   Repipet—5 ml capacity.
G.   Repipet—1 ml capacity.
H.   Test tubes, disposable—13 mm×100 mm.
I.   Test tubes with screw caps—16 mm×150 mm.
J.   Vortex mixer.
K.   Wrist action—shaker.

II. Equipment preparation:
    A.   Fluorimeter
        1.   Warm up the fluorimeter at least 20 minutes before using.
        2.   Set the excitation wavelength at 390 nm and the emission wavelength at 475 nm.

III. Reagents:
    A.   Acetone, ACS grade.
    B.   Fluorescamine.
    C.   L-leucine, reagent grade.
    D.   2-mercaptoethanol—Reagent grade.
    E.   Sodium dodecyl sulphate—electrophoretic grade.
    F.   Sodium phosphate monobasic, ACS grade.
    G.   Sodium phosphate dibasic, ACS grade.
    H.   Trichloroacetic acid—reagent grade.
    I.   Urea, ACS grade.

IV. Reagent preparation:
    A. 0.01% Fluoroescamine—in a 100 ml volumetric flask, dissolve 0.01 g of fluoroescamine in 90 ml acetone. Fill to volume with acetone. This solution should be made fresh for each sample set.
    B. L-leucine standard—in a 100 ml volumetric flask, dissolve 210 mg of L-leucine in 90 ml of 0.1 M sodium phosphate buffer (pH 8.0). Fill the flask to volume with the buffer. This solution is stable under refrigeration for 5 days.
    C. 0.1 M sodium phosphate buffer (pH 8.0)—in a volumetric flask, dissolve 26.8 g of sodium phosphate dibasic in 900 ml of distilled water. Fill to volume with distilled water. Add sodium phosphate monobasic until the solution pH is 8.0±0.1. This solution is stable for two months.
    D. 20% trichloroacetic acid—in a 1,000 ml volumetric flask, dissolve 200 g of trichloroacetic acid in 900 ml of distilled water. Remake solution for each day's work.
    E. 8 M urea—phosphate buffer—in a 1,000 ml volumetric flask, dissolve 480.5 g of urea in 600 ml of 0.1 M sodium phosphate buffer. This may require heating of the solution (at 140°F=60°C). Add 1% (based on urea) sodium lauryl sulphate (4.8 g) to the solution. Add 0.5% (based on urea) 2-mercaptoethanol (2.4 g) to the solution. Fill to volume with 0.1 M sodium phosphate buffer. Remake solution for each day's work.

V. Procedure:
    A.   Sample preparation
    1. Disperse 100 mg of each sample in 10.0 ml of 8 M urea-phosphate buffer in a test tube with a screw cap.
    2. Mix 6 ml of the L-leucine standard with 10.0 ml of 8 M urea—phosphate buffer in a test tube with a screw cap.
    3. Cap and vortex each sample. Shake in the wrist shaker until the sample is completely dissolved.
    4. Add 1 ml of the protein solution to 1 ml of 20% trichloroacetic acid in a disposable test tube using the repipet. Vortex.
    5. Allow the sample to rest 20 minutes at room temperature.
    6. Filter the solution through the filter paper. Save the filtrate.
    7. Add 25 µl of the filtrate to 2.0 ml of 0.1 M sodium phosphate buffer using the repipet. Prepare sample duplicates.
    8. Add 1.0 ml of 0.01% fluoroescamine in acetone to the solutions *while* vortexing.

    B.   Sample evaluation
    1. Evaluate the samples within 30 minutes of the fluorescamine addition.
    2. Set the autoclave fluorescence of the standard to 80 on the fluorimeter (excitation wavelength—390 nm, emission wavelength—475 nm).
    3. Measure the relative fluorescence intensity of each sample.

5

VI. Calculations:

The number of terminal $NH_2$ groups/$10^5$ grams of solids is calculated using the following equations:

$$\text{n moles } NH_2/\text{aliquot} = \frac{\text{Relative fluorescence}-1.19}{1.07}$$

$$\text{moles } NH_2/10^5 \text{ grams of solids} = \frac{\text{n moles } NH_2/\text{aliquot}}{0.125 \text{ mg/aliquot}} \times 10^{-1}$$

Preparation of protein isolates

Ten separate protein isolates were prepared by the general procedure described below, but varying the amount of enzyme or time of hydrolysis to control the number of available amino end groups of the protein measured by the procedure described above.

Defatted soybeans flakes were ground into flour and the ground flour was continuously extracted by the addition of water at 90°F (32°C) in a weight ratio of water to flour of about 10:1. A small amount of an anti-foaming agent and 0.5% by weight of sodium sulphite were also added.

The slurry of flour and water was pumped into a centrifuge and the aqueous extract was clarified by centrifugation. The aqueous extract containing solubilized protein was then adjusted to a pH value of 4.5 by the addition of hydrochloric acid, in order to precipitate the protein. The precipitated protein was separated and then diluted with water at 90°F (32°C) to form a slurry with a solids level of about 5% by weight. The slurry was then concentrated by centrifugation to a solids level of 12—14%. The slurry was then neutralized to a pH value of about 7.0.

The resulting slurry was then passed through a jet cooker at about 285°F (141°C) under positive pressure for about 9 seconds. The jet-cooked slurry was then discharged into a vacuum chamber held at 26 inches of Mercury (0.88 bars) in order to cool the slurry to a temperature of 120—125°F (49—52°C).

After cooling, bromelain was added to the slurry in the amount shown in the following Table and the slurry was maintained at a temperature of 120—127°F (49—53°C) and hydrolyzed for the time shown in the Table. After hydrolysis, the hydrolyzate was jet-cooked at a temperature of 285°F (141°C) for 9 seconds to terminate the hydrolysis, and it was then discharged into a second vacuum chamber maintained at a pressure of 24—26 inches of Mercury (0.81—0.88 bars), where it cooled to a temperature of about 140°F (60°C). The slurry was then spray-dried at an exhaust temperature of about 200°F (93°C) to produce a dried, hydrolyzed protein isolate.

Each isolate was then measured to determine the number of available amino end groups by the procedure described above, the results being shown in the following Table.

Each of the hydrolyzed protein isolates listed in the following Table was evaluated for its suspension characteristics in an aqueous medium having a pH of about 7.0 by the following test.

Equipment and materials

1. Balance—0.1 g or better sensitivity.
2. High-speed Blender with Stainless Steel Blender Assembly—360 ml total capacity, with variable speed transformer.
3. Graduated Cylinder—250 ml
4. Timer
5. Distilled Water
6. Liquid Defoamer, Pegosperse 100 (trade mark)—manufactured by Glyco, Inc., Greenwich, Connecticut.

Procedure

1. Weigh 10 g of a representative sample of the material.
2. Measure 200 ml of distilled water at 23±5°C, into the blender jar, add 5 drops of defoamer.
3. Transfer sample to blender jar.
4. Blend for 10 seconds at lower speed.
5. Immediately transfer the contents of the blender to a 250 ml graduated cylinder.
6. Allow the sample to stand undisturbed for 30 minutes.
7. Record the volume of each layer in ml and calculate the percentage of total volume it represents.

Typically, the material will separate into three layers: a top layer with those particles that will float; an intermediate layer with those particles that are in suspension; and a bottom layer with those particles which sink or are sedimentary in nature. For example, assuming a total volume of 210 ml, a float layer of 1 ml, and a sediment layer of 9 ml, then.

$$\text{Percent layer} = 100 \times \frac{\text{volume of individual layer}}{\text{total volume}}$$

or

**0 148 600**

$$\text{Float layer} = \frac{1 \text{ ml}}{210 \text{ ml}} \times 100 = 0.5\%$$

$$\text{Sediment layer} = \frac{9 \text{ ml}}{210 \text{ ml}} \times 100 = 4.3\%$$

In this manner, the percentage of float and sediment are calculated. The results of this test for each of the ten isolates are also listed in the Table.

Some of the samples also formed a "serum" layer; this is a clear layer below the float layer and is considered a suspension defect.

For each of the hydrolyzed isolates the above test was also repeated identical in every respect except that whole, homogenized milk was used instead of distilled water to further evaluate the suspension characteristics of each of the isolates in a "milk" type of product. These results are also listed in the Table.

Samples 1 and 2 and samples 9 and 10 are not within the scope of the present invention as hydrolysis has been carried out to provide too few or too many available amino end groups, respectively. Samples 3—8, where the number of available amino end groups is within the range from 20 to 35 per $10^5$ g of solids, represent examples of the present invention.

TABLE 1

| Isolate sample | Hydrolysis time (minutes) | Enzyme % by weight of protein solids | Available amino end groups/$10^5$g of solids |
|---|---|---|---|
| 1 | 13 | 0.035 | 11.2 |
| 2 | 19 | 0.040 | 17.5 |
| 3 | 20 | 0.038 | 21.1 |
| 4 | 20 | 0.038 | 23.7 |
| 5 | 25 | 0.038 | 27.9 |
| 6 | 25 | 0.038 | 28.0 |
| 7 | 25 | 0.038 | 29.7 |
| 8 | 25 | 0.038 | 32.8 |
| 9 | 30 | 0.043 | 36.6 |
| 10 | 30 | 0.043 | 40.3 |

TABLE 1 (cont'd)

| Water | | | Milk | |
|---|---|---|---|---|
| % Float | % Serum | % Sediment | % Float | % Sediment |
| 0.0 | 1.0 | 0.0 | 14.6 | 1.0 |
| 0.0 | 0.5 | 0.0 | 2.9 | 0.0 |
| 0.0 | 0.0 | 0.0 | 2.9 | 0.0 |
| 0.0 | 0.0 | 0.0 | 5.8 | 0.0 |
| 0.0 | 0.0 | 0.0 | 3.0 | 0.0 |
| 0.0 | 0.0 | 0.0 | 8.7 | 0.0 |
| 0.0 | 0.0 | 0.0 | 8.1 | 0.0 |
| 0.0 | 0.0 | 0.0 | 6.9 | 0.0 |
| 3.0[a] | 0.0 | 10.9[a] | 4.4 | 0.0 |
| 2.5[a] | 0.0 | 14.1[a] | 2.5 | 0.0 |

The results marked "a" for samples 9 and 10 should be disregarded, as the products coagulated for reasons which are probably not directly associated with the process of the present invention.

The above suspensions in milk and water were also subjectively evaluated for flavour and mouthfeel characteristics. Based upon this subjective examination, it was determined that all samples except 9 and 10 were free from any noticable bitter taste. An examination of mouthfeel characteristics indicated that all samples had a smooth mouthfeel without an undesirable chalky and/or gritty mouthfeel.

It is apparent from the above that within a predetermined range of available amino end groups the suspension and flavour characteristics of the hydrolyzed soy isolate is significantly better.

The number of available amino end groups can be measured by the fluoroescamine reaction or by any other technique having a comparable effect. In practice, once hydrolysis conditions have been established for a given product from a given starting material, continual monitering of the process (to determine available amino end groups) may not be required, provided that conditions remain stable, or such monitering may not be required at all.

**Claims**

1. A process for preparing a hydrolyzed vegetable protein isolate, in which protein is precipitated at its isoelectric point from an aqueous extract of a vegetable protein material and a slurry of the precipitated protein is subjected to enzymatic hydrolysis, characterized in that the enzymatic hydrolysis is terminated when the protein has from 20 to 35 moles of available amino end groups per $10^5$ grams of solids, as measured by fluorescamine reaction.

2. A process according to claim 1, in which, prior to isoelectric precipitation, said aqueous extract has a pH value of at least 6.0.

3. A process according to claim 2, in which said pH value is from 6.5 to 10.0.

4. A process according to any one of claims 1 to 3, in which aqueous extraction is effected at a temperature of from ambient to 120°F (49°C).

5. A process according to any one of the preceding claims, in which the pH is adjusted to a value of from 4.0 to 5.0 to achieve isoelectric precipitation.

6. A process according to any one of the preceding claims, in which said slurry has a solids content of from 3 to 30% by weight.

7. A process according to claim 6, in which said solids content is from 5 to 17% by weight.

8. A process according to any one of the preceding claims, in which said slurry has a pH value of from 3.0 to 8.5.

9. A process according to any one of the preceding claims, in which said protein is enzymatically hydrolyzed with a protease.

10. A process according to claim 9, in which said protease is bromelain.

11. A process according to any one of the preceding claims, in which said number of amino end groups is from 25 to 29 moles per $10^5$ g of solids.

# 0 148 600

12. A process according to any one of the preceding claims, in which said slurry of precipitated protein is dynamically heated in a jet cooker at a temperature of at least 220°F (104°C) for a time sufficient to expose reactive sites on the protein molecules and is then cooled prior to enzymatic hydrolysis.

13. A process according to claim 12, in which said slurry is dynamically heated at a temperature of from 220 to 400°F (104—204°C) for a period of from 7 to 100 seconds.

14. A process according to claim 12 or claim 13, in which said slurry is cooled prior to enzymatic hydrolysis by expelling said slurry into an atmosphere of substantially lower pressure.

15. A process according to any one of the preceding claims, in which the enzymatically hydrolyzed protein isolate is dewatered to provide a dried isolate.

16. A process according to claim 15, in which dewatering is effected by spray drying.

17. A process according to any one of the preceding claims, in which said vegetable protein material is a material derived from soybeans.

18. A process according to claim 17, in which said material is defatted soy protein material.

19. A proteinaceous beverage in which all or part of the protein content is provided by a hydrolyzed vegetable protein isolate prepared by a process as claimed in any one of the preceding claims.

## Patentansprüche

1. Verfahren zur Herstellung eines isolierten hydrolisierten Pflanzenproteins, bei dem Protein an dessen isolektrischem Punkt aus einem wäßrigen Extrakt eines Pflanzenproteinmaterials ausgefällt und eine Aufschlämmung des ausgefällten Proteins einer enzymatischen Hydrolyse unterworfen wird, dadurch gekennzeichnet, daß man die enzymatische Hydrolyse beendet, wenn das Protein 20 bis 35 Mole an verfügbaren Amino-Endgruppen pro $10^5$ g des Feststoffes, gemessen durch Fluorescamin-Reaktion aufweist.

2. Verfahren gemäß Anspruch 1, bei dem das wäßrige Extrakt vor der Ausfällung am isoelektrischen Punkt einen pH-Wert von wenigstens 6,0 aufweist.

3. Verfahren gemäß Anspruch 2, bei dem der pH-Wert 6,5 bis 10,0 beträgt.

4. Verfahren gemäß einem der Ansprüche 1 bis 3, bei dem man die Wasserextraktion bei einer Temperatur von Umgebungstemperatur bis 49°C (120°F) vornimmt.

5. Verfahren gemäß einem der vorhergehenden Ansprüche, bei dem man den pH-Wert auf einen Wert von 4,0 bis 5,0 zur Erzielung der isoelektrischen Ausfällung einstellt.

6. Verfahren gemäß einen der vorhergehenden Ansprüche, bei dem die Aufschlämmung einen Feststoffgehalt von 3 bis 30 Gew.-% hat.

7. Verfahren gemäß Anspruch 6, bei dem der Feststoffgehalt 5 bis 17 Gew.-% beträgt.

8. Verfahren gemäß einem der vorhergehenden Ansprüche, bei dem Aufschlämmung einen pH-Wert von 3,0 bis 8,5 hat.

9. Verfahren gemäß einem der vorhergehenden Ansprüche, bei dem das Protein enzymatisch mit einer Protease hydrolisiert wird.

10. Verfahren gemäß Anspruch 9, bei dem die Protease Bromelain ist.

11. Verfahren gemäß einem der vorhergehenden Ansprüche, bei dem die Anzahl der Amino-Endgruppen 25 bis 29 Mol pro $10^5$ g des Feststoffes beträgt.

12. Verfahren gemäß einem der vorhergehenden Ansprüche, bei dem die Aufschlämmung aus ausgefälltem Protein dynamisch in einem Einspritzkocher bei einer Temperatur von wenigstens 104°C (220°F) während einer ausreichenden Zeit erhitzt wird, um reaktive Stellen an dem Proteinmolekül freizulegen und dann vor der enzymatischen Hydrolyse gekült wird.

13. Verfahren gemäß Anspruch 12, bei dem man die Aufschlämmung dynamisch bei einer Temperatur von 104 bis 204°C (220 bis 400°F) während eines Zeitraumes von 7 bis 100 Sekunden erhitzt.

14. Verfahren gemäß Anspruch 12 oder Anspruch 13, bei dem man die Aufschlämmung vor der enzymatischen Hydrolyse kühlt, indem man die Aufschlämmung in einer Atmosphäre von wesentlich niedrigerem Druck ausstößt.

15. Verfahren gemäß einem der vorhergehenden Ansprüche, bei dem man das isolierte Produkt des enzymatisch hydrolisierten Proteins unter Erhalt eines getrockneten isolierten Produktes entwässert.

16. Verfahren gemäß Anspruch 15, bei dem man das Entwässern durch Sprüchtrocknen bewirkt.

17. Verfahren gemäß einem der vorhergehenden Ansprüche, bei dem das Pflanzenproteinmaterial ein Material ist, das sich von Sojabohnen ableitet.

18. Verfahren gemäß Anspruch 17, bei dem das Material entfettetes Sojaproteinmaterial ist.

19. Proteinhaltiges Getränk, bei dem der gesamte oder ein Teil des Proteingehaltes von einem isolierten Produkt eines hydrolisierten Pflanzenproteins, hergestellt nach einem Verfahren gemäß einem der vorhergehenden Ansprüche, zur Verfügung gestellt wird.

## Revendications

1. Procédé pour préparer un extrait de protéine végétale hydrolysée, dans lequel la protéine est précipitée à son point isoélectrique à partir d'un extrait aqueux d'une substance de protéine végétale et une bouillie de la protéine précipitée est soumise à une hydrolyse enzymatique, caractérisé en ce que

9

l'hydrolyse enzymatique est terminée lorsque la protéine possède de 20 à 35 moles d'amines terminales pour $10^5$ grammes de matière solide, mesuré par réaction à la fluocrescamine.

2. Procédé selon la revendication 1, dans lequel avant la précipitation isoélectrique, ledit extrait aqueux a une valeur de pH d'au moins 6.

3. Procédé selon la revendication 2, dans lequel ladite valeur de pH est comprise entre 6,5 et 10,0.

4. Procédé selon l'une quelconque des revendications 1 à 3, dans lequel l'extraction aqueuse est réalisée à une température comprise entre la température ambiante et 120°F (49°C).

5. Procédé selon l'une quelconque des revendications précédentes, dans lequel le pH est ajusté à une valeur comprise entre 4 et 5 pour réaliser la précipitation isoélectrique.

6. Procédé selon l'une quelconque des revendications précédentes, dans lequel ladite bouillie a une teneur en matière solide de 3 à 30% en poids.

7. Procédé selon la revendication 6, dans lequel ladite teneur en matière solide est de 5 à 17% en poids.

8. Procédé selon l'une quelconque des revendications précédentes, dans lequel ladite bouillie a une valeur de pH de 3,0 à 8,5.

9. Procédé selon l'une quelconque des revendications précédentes dans lequel ladite protéine est hydrolysée par voie enzymatique par une protéase.

10. Procédé selon la revendication 9, dans lequel ladite protéase est un bromélinase.

11. Procédé selon l'une quelconque des revendications précédentes, dans lequel ledit nombre d'amines terminales est de 25 à 29 moles pour $10^5$ grammes de matière solide.

12. Procédé selon l'une quelconque des revendications précédentes, dans lequel ladite bouillie de protéine précipitée est chauffée de façon dynamique dans un four à injection à une température d'au moins 220°F (104°C) pendant un temps suffisant pour exposer les sites actifs de la molécule protéinique, puis est ensuite refroidie avant l'hydrolyse enzymatique.

13. Procédé selon la revendication 12, dans lequel ladite bouillie est chauffée de façon dynamique à une température de 220 à 400°F (104 à 204°C) pendant une période de 7 à 100 secondes.

14. Procédé selon les revendications 12 ou 13 dans lequel ladite bouillie est refroidie avant l'hydrolyse enzymatique, en expulsant ladite bouillie dans une atmosphère de pression sensiblement inférieure.

15. Procédé selon l'une quelconque des revendications précédentes, dans lequel l'extrait de protéine hydrolysée par voie enzymatique est déshydraté pour fournir un extrait sec.

16. Procédé selon la revendication 15 dans lequel la désydratation est effectuée par séchage par pulvérisation.

17. Procédé selon l'une quelconque des revendications précédentes, dans lequel ladite substance de protéine végétale est une matière substance dérivée des grains de soja.

18. Procédé selon la revendication 17, dans lequel ladite substance est une substance de protéine de soja dégraissée.

19. Une boisson protéinique, dans laquelle tout ou partie de la teneur en protéine est fourni par un extrait de protéine végétale hydrolysée, préparé par le procédé tel que revendiqué selon l'une quelconque des revendications précédentes.